# FASCICULE DE BREVET EUROPEEN

(11) **EP 2 209 193 B1**
(45) Date de publication et mention de la délivrance du brevet: **13.07.2016**
(21) Numéro de dépôt: 10150139.3
(22) Date de dépôt: 05.01.2010
(51) Int. Cl.: H02K 23/42, F02N 11/00, H02K 21/38, H02K 1/17

(54) **Machine électrique tournante à pôles saillants**
Elektrische Drehendemaschine mit Schenkelpolen
Rotating electric machine with saliant poles

(30) Priorité: 15.01.2009 FR 0950197
(43) Date de publication de la demande: 21.07.2010
(73) Titulaire: Valeo Equipements Electriques Moteur, 94046 Créteil Cedex (FR)
(72) Inventeur: Labbe, Nicolas, 69007 Lyon (FR); Dupeux, Benoit, 38690 Oyeu (FR); Yonnet, Jean-Paul, 38240 Meylan (FR)
(74) Mandataire: de Lambilly Delorme, Marie Pierre

(56) Documents cités:
- DE-A1- 19 510 729
- FR-A- 1 157 452
- FR-A- 2 091 357
- GB-A- 147 812
- US-A- 3 296 472

## Description

La présente invention concerne une machine électrique tournante, réversible ou non, notamment un démarreur de véhicule automobile.

Les machines électriques tournantes comprennent un rotor induit et un stator inducteur montés de façon coaxiale, le stator entourant le rotor. Le rotor est solidaire d'un arbre moteur tournant à l'intérieur d'une culasse. Le stator a une pluralité de pôles magnétiques disposés sur une surface circonférentielle interne d'une culasse et constitués de pôles saillants autour desquels sont bobinés des fils inducteurs, l'ensemble constituant un inducteur bobiné. Le rotor, placé au centre du stator, comprend des fils d'induit bobinés dans des encoches.

Les pôles inducteurs du stator sont le plus souvent avec des "épanouissements", c'est-à-dire avec des prolongations latérales sur leurs sommets comme sur un T majuscule.

Les inducteurs bobinés sont particulièrement sujets à une forte réaction d'induit à cause de leurs pièces polaires, cet effet est beaucoup plus marqué que dans le cas d'un inducteur à aimants permanents. En effet, des pôles saillants contribuent à amplifier l'induction résultant de la force magneto-motrice de l'induit, et leurs épanouissements renforcent l'effet de déformation des lignes d'induction dues à l'inducteur, en fournissant un trajet et un matériau privilégiés aux lignes d'induction dues à l'induit, celles-ci étant perpendiculaires à celles de l'inducteur à cet endroit. On aboutit donc à un renforcement des effets de la réaction de l'induit alors qu'on cherche couramment à les réduire.

Le document DE-A-195 10 729 décrit une machine électrique tournante selon l'état de la technique.

L'objet de l'invention est de réduire les effets de la réaction d'induit en rendant anisotropes des pièces ferromagnétiques, c'est-à-dire en faisant en sorte qu'elles présentent une perméance nettement plus élevée dans la direction parallèle à l'axe d'inducteur que dans la direction qui lui est transversale, et cela grâce à une ou plusieurs fentes ou encoches. Cet objectif est ainsi obtenu sur une machine électrique tournante à courant continu, telle qu'un démarreur de véhicule automobile, et qui comprend:
- un stator à pôles saillants comprenant au moins quatre pôles répartis uniformément sur la circonférence du stator,
- un rotor disposé à l'intérieur du rotor,
- un groupe de balais agencés pour permettre l'alimentation électrique du rotor,
- au moins deux pôles opposés géométriquement comprennent chacun au moins une fente dans un plan parallèle à l'axe de rotation du rotor, de préférence dans un plan passant dans l'axe du rotor, les fentes sont sensiblement radiales
et caractérisée en ce qu'une fente est disposée au milieu du pôle saillant considéré. En minimisant les effets de réaction d'induit, on équilibre l'utilisation de la matière magnétique des pièces du stator et on atténue un effet néfaste de réaction d'induit qui augmente avec la saturation des pièces polaires d'inducteur, et qui aboutit à diminuer le couple magnétique moteur. La fente disposée transversalement au flux d'induit représente un entrefer pour l'induit. Un pôle saillant peut avoir plusieurs fentes. Le nombre de fentes ne sera pas trop important pour tenir compte à la fois de la taille de la machine et de la section de passage du flux principal inducteur. Les fentes peuvent avoir des profondeurs différentes, de préférence la plus grande possible en respectant une épaisseur de culasse minimum au droit des fentes, épaisseur minimale égale à l'épaisseur de la culasse entre deux pôles.

Selon une autre caractéristique, la fente contient un aimant dit aimant de compensation, il est aimanté de façon transversale soit perpendiculaire au rayon de la machine ou transversale à la direction du flux inducteur. L'insertion d'un aimant permanent ne perturbe pas le flux principal, ou flux inducteur, mais affaiblit le flux de réaction de l'induit car l'aimant est aimanté de façon transversale par rapport au flux inducteur et orientée en opposition au champ d'induit, en plus la zone aimantée représente un entrefer pour le champ d'induit car l'aimant a une perméabilité très faible comparativement à un matériau ferromagnétique. Les inconvénients dus à la réaction magnétique d'induit sont ainsi réduits, en particulier la distorsion des formes d'ondes magnétiques dans l'entrefer, le décalage de la ligne neutre, la dégradation des condition de commutation, l'augmentation des pertes fer et la baisse de rendement en cas de saturation qui est localisée d'un seul coté de chaque pôle alors que l'autre voit sa matière magnétique sous utilisée.

La position préférée de l'aimant est au milieu de la pièce polaire de l'inducteur dans une fente parallèle à l'axe de rotation et à l'axe du flux inducteur de chaque pôle. Cette solution remplace avantageusement, dans certaines conditions, les moyens classiques tels que les enroulements de compensation utilisés dans des machines plus volumineuses.

Selon un mode de réalisation particulier, un aimant d'induction rémanente d'environ 1T (Tesla) a de préférence une hauteur sensiblement égale à l'épaisseur restante du stator au droit de la fente. Ainsi, si la fente est plus profonde que la hauteur de l'aimant, la hauteur de l'aimant sera de préférence sensiblement la même que la hauteur du stator entre le fond de la fente et l'extérieur du stator. Selon le type d'aimant choisi (ferrite d'environ 0,35T ou terres rares par exemple NdFeB néodyme-fer-bore à 1,1T d'induction rémanente) la hauteur de l'aimant par rapport à une épaisseur du stator au droit de la fente sera différente, elle sera trois fois plus grande pour un aimant ferrite à 0,35T. Dans un exemple de réalisation, l'aimant est placé au centre du pôle saillant et il n'y a qu'une seule encoche. Il est possible de placer plusieurs aimants, mais dans ce cas leur hauteur sera plus faible que dans le cas où il n'y en aura qu'un. La hauteur d'un aimant seul Hₐ est sensiblement égale à la somme des hauteurs des aimants Hₙ au nombre de n: Hₐ=nHₙ. La hauteur d'un aimant est fonction de l'épaisseur de matière ferromagnétique présente autour dudit aimant dans le noyau polaire, la hauteur dudit aimant étant sensiblement égale à l'épaisseur circonférentielle du noyau polaire dans le sens du champ magnétique d'induit.
Selon un mode de réalisation particulier, deux pôles saillants opposés géométriquement sont des pôles conséquents. Les pôles conséquents permettent d'économiser de la matière active comme réduire la quantité de cuivre utilisée ou d'aimants permanents. L'économie peut aller jusqu'à 50% de cuivre en moins pour l'inducteur.

Selon une caractéristique particulière, les pôles conséquents comprennent au moins deux fentes. Les pôles conséquents peuvent avoir plus de fentes que les pôles saillants puisque sans spires inductrices à implanter on peut faire des pôles sans épanouissements de largeur constante égale à celle totale, maximale, des pôles saillants épanouissements compris. Ceci permet d'augmenter le caractère anisotrope et de mieux lutter contre les effets de la réaction d'induit. Les fentes constituent alors des encoches

Selon une variante, les pôles conséquents comprennent au moins un aimant dans le haut d'une fente, soit au plus près de l'entrefer. S'il n'y a qu'un aimant, sa position est de préférence centrale.

Selon une autre variante, le pôle saillant a au moins deux fentes et chaque fente a un aimant de petite taille. La taille de l'aimant sera d'autant plus petite qu'il y aura plus d'aimants sur la circonférence du pôle puisque la hauteur dudit aimant est sensiblement égale à l'épaisseur des dents adjacentes.

On peut envisager l'utilisation de film de Kapton^{®} fabriqué par Dupont de Nemours comme isolant d'encoches d'induit au rotor pour des moteurs soumis à de hautes températures (jusqu'à 400°C). Ce film étant très mince, il est particulièrement adapté pour les démarreurs ayant un haut rendement car il permet d'améliorer le remplissage des encoches et/ou d'augmenter l'épaisseur des dents pour une même section de cuivre par encoche d'induit. Le film Kapton^{®} fait de 7,6µm à 19µm au lieu de 0,5 à 3mm d'épaisseur pour une isolation classique avec du papier pour des conducteurs dont la plus petite dimension est de l'ordre de 1 mm, il y a donc plus de place pour le conducteur du bobinage dans une même encoche ou pour un même bobinage on peut avoir des encoches plus petites et donc des dents plus larges, ce qui est bénéfique pour le couple magnétique.

La machine électrique peut être réversible.

Le matériau magnétique du corps du stator peut être ferromagnétique.

L'invention sera mieux comprise à la lecture de la description qui va suivre donnée uniquement à titre d'exemple et faite en se référant aux dessins annexés dans lesquels :
- la figure 1 représente un démarreur de l'état de la technique,
- la figure 2 représente une vue en coupe d'une machine électrique selon l'état de la technique,
- la figure 2a représente le détail d'un pôle saillant,
- la figure 3 détaille une fente selon l'invention,
- la figure 4 représente le détail d'un pôle saillant,
- la figure 4a montre le détail d'une fente avec aimant,
- la figure 5a montre un pôle conséquent avec plus de 2 encoches,
- la figure 5b montre une cale d'encoche,
- la figure 6 représente un pôle saillant avec plusieurs encoches,
- la figure 7 montre un pôle saillant avec plusieurs aimants,
- la figure 7a détaille une fente avec aimant,
- la figure 8 représente un pôle conséquent avec plusieurs aimants,
- la figure 9 représente une vue en coupe d'une machine électrique selon un autre mode de réalisation.

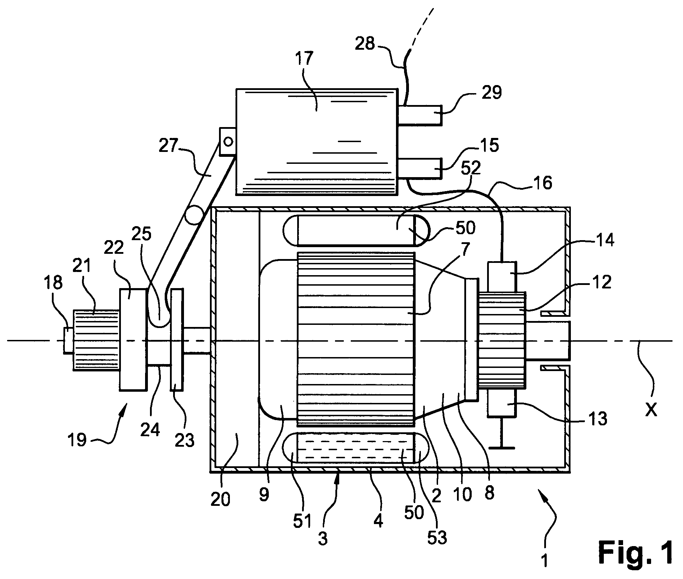

On a représenté à la figure 1, un démarreur 1 pour moteur de véhicule automobile de l'état de la technique, qui comporte d'une part, un rotor 2, encore appelé induit, pouvant tourner autour d'un axe X, et d'autre part, un stator 3, encore appelé inducteur, autour du rotor 2.

Ce stator 3 comporte une culasse 4 portant une structure bobinée 50 à excitation par enroulements électriques formant un bobinage inducteur 51.

Le bobinage inducteur 51 forme, de part et d'autre du corps de stator 52, un chignon avant 51 et un chignon arrière 53.

Le rotor 2 comporte un corps de rotor 7 et un bobinage 8 enroulé dans des encoches du corps de rotor 7.

Le bobinage 8 forme, de part et d'autre du corps de rotor 7, un chignon avant 9 et un chignon arrière 10.

Le rotor 2 est pourvu, à l'arrière, d'un collecteur 12 comprenant une pluralité de pièces de contact connectées électriquement aux éléments conducteurs, formés dans l'exemple considéré par des fils, du bobinage 8.

Un groupe de balais 13 et 14 est prévu pour l'alimentation électrique du bobinage 8, l'un des balais 13 étant relié à la masse du démarreur 1 et un autre des balais 14 étant relié à une borne électrique 15 d'un contacteur 17 via un fil 16. Les balais sont par exemple au nombre de quatre.

Les balais 13 et 14 viennent frotter sur le collecteur 12 lorsque le rotor 2 est en rotation, permettant l'alimentation du rotor 2 par commutation du courant électrique dans des sections du rotor 2.

Le démarreur 1 comporte en outre un ensemble lanceur 19 monté de manière coulissante sur un arbre d'entraînement 18 et pouvant être entraîné en rotation autour de l'axe X par le rotor 2.

Un ensemble réducteur de vitesses 20 est interposé entre le rotor 2 et l'arbre d'entraînement 18, de manière connue en soi.

L'ensemble lanceur 19 comporte un élément d'entraînement formé par une poulie 21 et destiné à s'engager sur un organe d'entraînement du moteur à combustion, non représenté. Cet organe d'entraînement est par exemple une courroie.

La poulie 21 peut être remplacée par un élément d'engrenage, notamment une roue dentée, pour entraîner le moteur à combustion.

L'ensemble lanceur 19 comprend en outre une roue libre 22 et une rondelle poulie 23 définissant entre elles une gorge 24 pour recevoir l'extrémité 25 d'une fourchette 27.

Cette fourchette 27 est réalisée par exemple par moulage d'une matière plastique.

La fourchette 27 est actionnée par le contacteur 17 pour déplacer l'ensemble lanceur 19 par rapport à l'arbre d'entraînement 18, suivant l'axe X, entre une première position dans laquelle l'ensemble lanceur 19 entraîne le moteur à combustion par l'intermédiaire de la poulie 21, et une deuxième position dans laquelle l'ensemble lanceur 19 est désengagé du moteur à combustion.

Le contacteur 17 comprend, outre la borne 15 reliée au balai 14, une borne 29 reliée via un élément de liaison électrique, notamment un fil 28, à une alimentation électrique du véhicule, notamment une batterie.

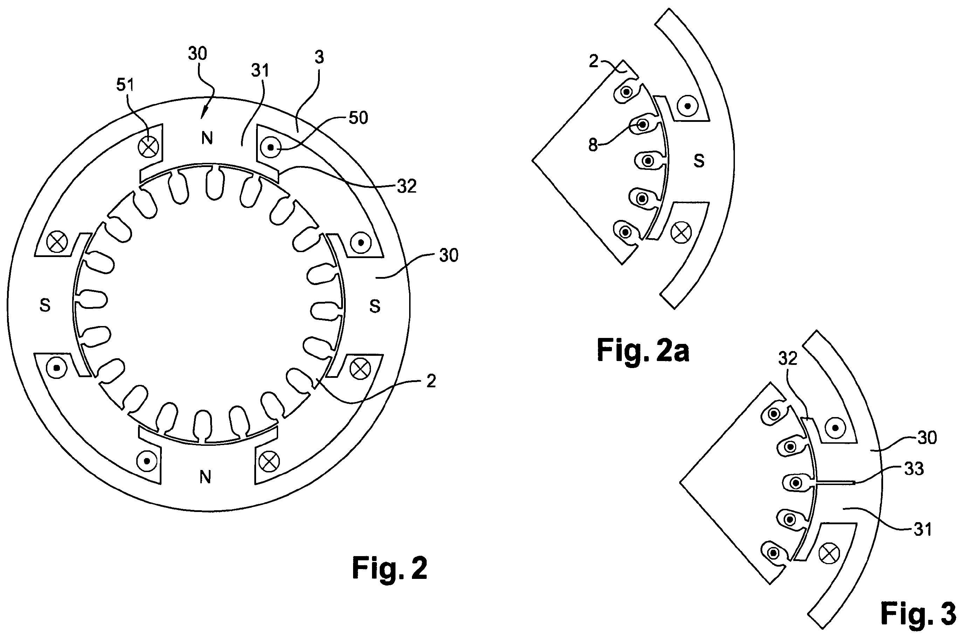

Comme visible à la figure 2, le stator inducteur 3 comporte des pôles magnétiques aussi appelés pôles saillants 30, il est solidaire intérieurement de la culasse 4. Les pôles saillants 30 sont formés par un noyau polaire métallique 31 et comporte un bobinage inducteur 50 comportant par exemple deux paires d'enroulements 51, qui sont enroulés chacun autour d'un des noyau polaire 31 solidaire de la culasse 4. Chaque enroulement 51 est composé d'un conducteur électrique parcouru par un courant continu.

Ce noyau polaire 31 comporte un épanouissement polaire 32 qui le prolonge vers un rotor 2.

Le rotor 2 comporte un bobinage d'induit 8.

Les pôles saillants 30 de l'état de la technique présentent une saturation importante due à la réaction de l'induit. Cette saturation est localisée d'un seul coté du pôle dans la direction circonférentielle.

La figure 3 représente un premier mode de réalisation, où le pôle saillant 30 comporte une fente 33 située au milieu du noyau polaire 30, mais cette fente 33 peut également être décalée du centre du pôle saillant 30, par exemple du quart de la largeur du noyau polaire.

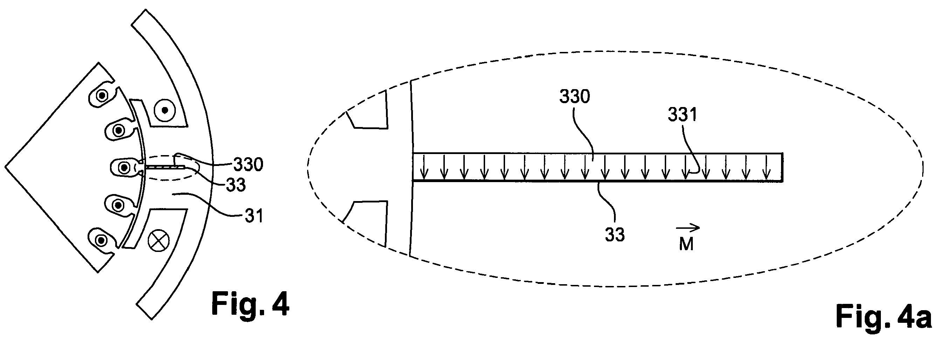

La figure 4 montre un deuxième mode de réalisation, où la fente 33 est remplie par un aimant 330. L'aimant 330 est disposé de façon à ce que son aimantation 331 soit transversale au flux d'inducteur, donc parallèle au flux d'induit mais en sens opposé pour produire un effet de compensation. Ainsi, la différence de perméabilité, l'anisotropie et la polarisation agissent contre les effets de la réaction d'induit, et en particulier la saturation qu'elle introduit.

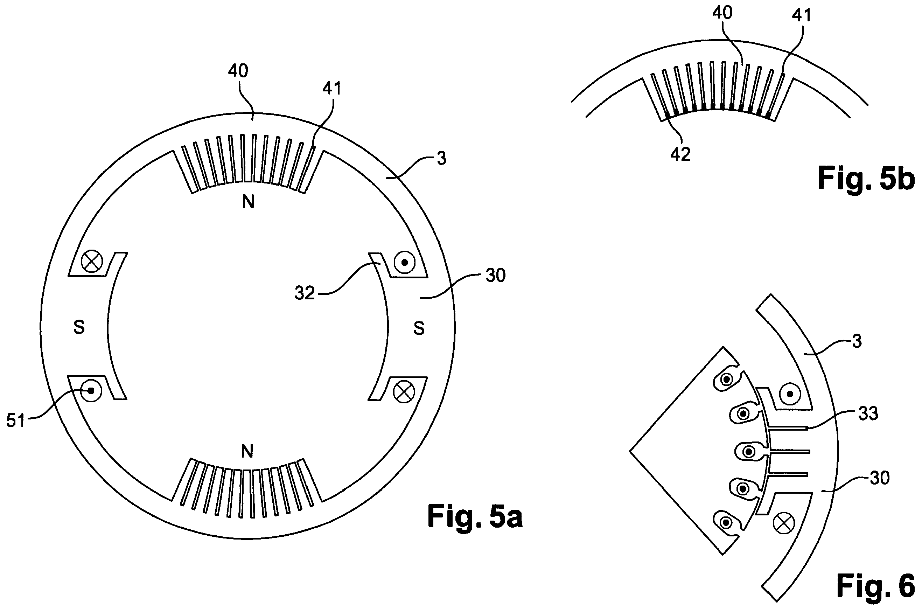

La figure 5a montre un troisième mode de réalisation avec un stator 3 avec deux pôles non bobinés constituant des pôles conséquents 40 encadrés par deux pôles saillants 30 bobinés, il est possible de n'avoir qu'un seul pôle conséquent 40 sur le rotor 3. Quand il y a plusieurs pôles conséquents 30 ceux-ci sont de préférence tous de même polarité électrique, sur la figure 5a tous les pôles conséquents sont des pôles Nord. Les pôles conséquents 40 sont pourvus de fentes 41. Ces fentes 41 peuvent être relativement profondes par rapport au pôle conséquent 40, elles peuvent descendre presque jusqu'au bord du noyau polaire 31. Ces fentes 41 rendent le pôle conséquent 40 anisotrope et ainsi s'oppose aux effets de la réaction d'induit dont la saturation qu'elle peut introduire en supplément.

La figure 5b représente une variante du mode de réalisation précédent où les fentes 41 des pôles conséquents 40 sont fermées par des cales d'encoches 42.

La figure 6 représente un pôle saillant 30 avec un noyau polaire 31 comportant plusieurs fentes 33.

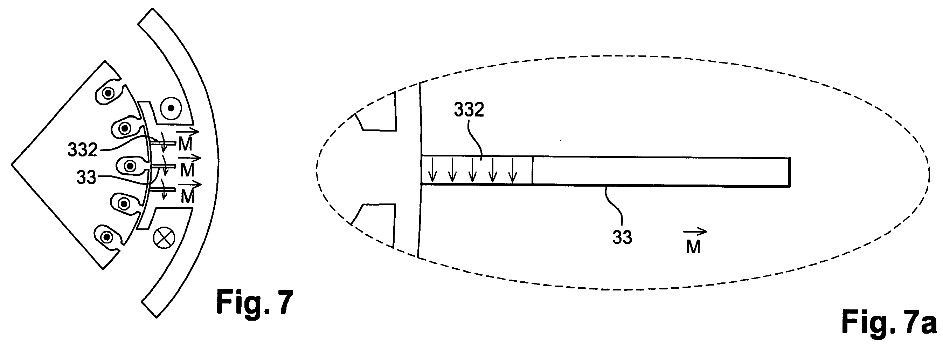

Le pôle saillant 30 de la figure 7 comporte plusieurs fentes 33 avec des aimants 332 de relativement faible hauteur par rapport au noyau polaire 31. Ces aimants 332 sont aimantés de façon transversale par rapport au flux inducteur. La figure 7a montre le détail de la fente 33 plus profonde que l'aimant 332.

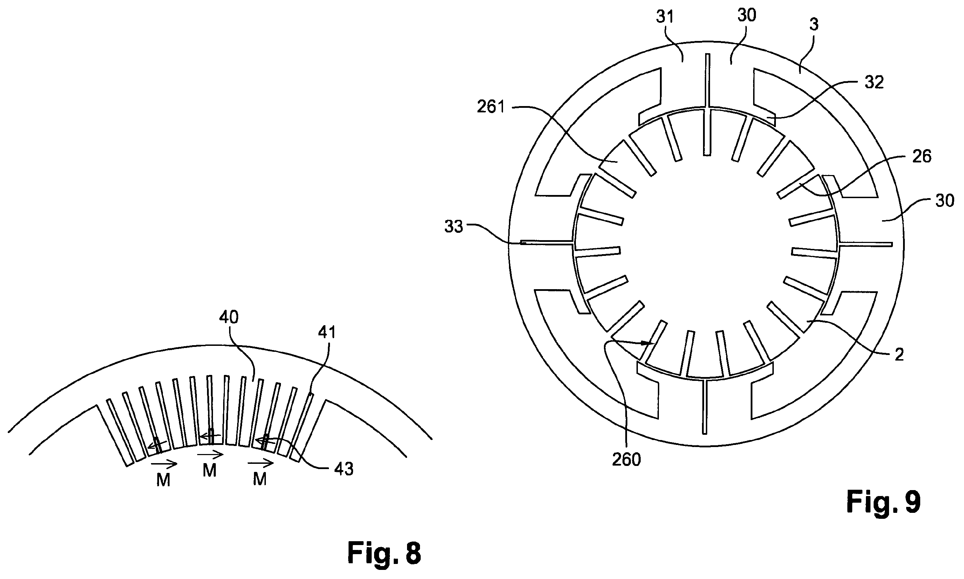

La figure 8 représente une autre variante où le pôle conséquent 40 comporte des fentes 41 dont certaines comportent de petits aimants 43 de petite section aussi appelés aimants de compensation.

La figure 9 montre une machine électrique tournante avec un rotor 2 dont les encoches 26 sont isolées avec du Kapton^{®} 260 de très faible épaisseur. Comme on peut le constater les encoches 26 sont très fines puisque, grâce à la place gagnée sur l'isolant, on peut mettre pratiquement la même section de fil conducteur dans une encoche plus étroite, et donc avoir des dents 261 plus larges, ce qui améliore les performances électromagnétiques de la machine.

## Revendications

1. Machine électrique tournante (1) à courant continu, telle qu'un démarreur de véhicule automobile, comprenant:
- un stator (3) à pôles saillants (30) comprenant au moins quatre pôles répartis uniformément sur la circonférence du stator (3),
- un rotor (2) disposé à l'intérieur du rotor (3),
- un groupe de balais (13, 14) agencés pour permettre l'alimentation électrique du rotor (3),
- au moins deux pôles saillants (30) opposés géométriquement comprennent chacun au moins une fente (33) parallèle à l'axe de rotation du rotor (3)
**caractérisé en ce qu'**une fente (33) est disposée au milieu du pôle saillant (30) considéré.

2. Machine électrique tournante (1) selon la revendication précédente **caractérisée en ce que** la fente (33) contient un aimant (330, 332) aimanté de façon transversale à la direction du flux inducteur.

3. Machine électrique tournante (1) selon la revendication précédente, **caractérisée en ce que** l'aimant (330, 332) a une hauteur sensiblement égale à la moitié de la hauteur de l'épaisseur du stator (3) au droit de la fente (33).

4. Machine électrique tournante (1) selon une des revendications précédentes **caractérisée en ce que** au moins un pôle saillant (30) est un pôle conséquent (40).

5. Machine électrique tournante (1) selon la revendication précédente, **caractérisée en ce que** les pôles conséquents (40) comprennent au moins deux fentes (41).

6. Machine électrique tournante (1) selon la revendication précédente, **caractérisée en ce que** les pôles conséquents (40) comprennent au moins un aimant (42) dans le haut d'une fente (41).

7. Machine électrique tournante (1) selon la revendication 1 à 4, **caractérisée en ce que** le pôle saillant (30) a au moins deux fentes (33) et chaque fente ayant un aimant de petite taille (332).

8. Démarreur de véhicule automobile comprenant une machine électrique selon l'une quelconque des revendications précédentes.

## Patentansprüche

1. Rotierende elektrische Gleichstrommaschine (1), wie ein Anlasser eines Kraftfahrzeugs, die enthält:
- einen Stator (3) mit Schenkelpolen (30), der mindestens vier Pole enthält, die gleichmäßig auf dem Umfang des Stators (3) verteilt sind,
- einen Rotor (2), der im Inneren des Stators (3) angeordnet ist,
- eine Gruppe von Bürsten (13, 14), die eingerichtet sind, um die Stromversorgung des Rotors (3) zu erlauben,
- mindestens zwei geometrisch entgegengesetzte Schenkelpole (30) enthalten je mindestens einen Schlitz (33) parallel zur Drehachse des Rotors (3),
**dadurch gekennzeichnet, dass** ein Schlitz (33) in der Mitte des betrachteten Schenkelpols (30) angeordnet ist.

2. Rotierende elektrische Maschine (1) nach dem vorhergehenden Anspruch, **dadurch gekennzeichnet, dass** der Schlitz (33) einen Magnet (330, 332) enthält, der quer zur Richtung des Feldflusses magnetisiert ist.

3. Rotierende elektrische Maschine (1) nach dem vorhergehenden Anspruch, **dadurch gekennzeichnet, dass** der Magnet (330, 332) eine Höhe im Wesentlichen gleich der Hälfte der Höhe der Dicke des Stators (3) vor dem Schlitz (33) hat.

4. Rotierende elektrische Maschine (1) nach einem der vorhergehenden Ansprüche, **dadurch gekennzeichnet, dass** mindestens ein Schenkelpol (30) ein Folgepol (40) ist.

5. Rotierende elektrische Maschine (1) nach dem vorhergehenden Anspruch, **dadurch gekennzeichnet, dass** die Folgepole (40) mindestens zwei Schlitze (41) enthalten.

6. Rotierende elektrische Maschine (1) nach dem vorhergehenden Anspruch, **dadurch gekennzeichnet, dass** die Folgepole (40) mindestens einen Magnet (42) im oberen Bereich eines Schlitzes (41) enthalten.

7. Rotierende elektrische Maschine (1) nach Anspruch 1 bis 4, **dadurch gekennzeichnet, dass** der Schenkelpol (30) mindestens zwei Schlitze (33) hat, und jeder Schlitz einen kleinen Magneten (332) hat.

8. Kraftfahrzeuganlasser, der eine elektrische Maschine nach einem der vorhergehenden Ansprüche enthält.

## Claims

1. Direct current rotating electric machine (1), such as a motor vehicle starter, comprising:
- a stator (3) with salient poles (30) comprising at least four poles distributed uniformly on the circumference of the stator (3),
- a rotor (2) arranged inside the rotor (3),
- a group of brushes (13, 14) arranged to allow the rotor (3) to be electrically powered,
- at least two geometrically opposite salient poles (30) each comprising at least one slit (33) parallel to the axis of rotation of the rotor (3)
**characterized in that** a slit (33) is arranged in the middle of the salient pole (30) concerned.

2. Rotating electric machine (1) according to the preceding claim, **characterized in that** the slit (33) contains a magnet (330, 332) magnetized transversely to the direction of the inducting flux.

3. Rotating electric machine (1) according to the preceding claim, **characterized in that** the magnet (330, 332) has a height substantially equal to half the height of the thickness of the stator (3) in line with the slit (33).

4. Rotating electric machine (1) according to one of the preceding claims, **characterized in that** at least one salient pole (30) is a sizeable pole (40).

5. Rotating electric machine (1) according to the preceding claim, **characterized in that** the sizeable poles (40) comprise at least two slits (41).

6. Rotating electric machine (1) according to the preceding claim, **characterized in that** the sizeable poles (40) comprise at least one magnet (42) in the top of a slit (41).

7. Rotating electric machine (1) according to Claims 1 to 4, **characterized in that** the salient pole (30) has at least two slits (33), each slit having a magnet of small size (332).

8. Motor vehicle starter comprising an electric machine according to any one of the preceding claims.
